# FASCICULE DE BREVET EUROPEEN

(11) **EP 1 447 302 B1**
(45) Date de publication et mention de la délivrance du brevet: **31.08.2011**
(21) Numéro de dépôt: 04364016.8
(22) Date de dépôt: 17.02.2004
(51) Int. Cl.: B62B 9/20

(54) **Voiture d'enfant comprenant des bras poussoirs équipés de poignées rotatives, et poignée correspondante**
Kinderwagen mit Schieberrahmen mit Schwenkgriffen und korrespondierender Griff
Pram having pushing frame members fitted with rotating handles, and corresponding handle

(30) Priorité: 17.02.2003 FR 0301908
(43) Date de publication de la demande: 18.08.2004
(73) Titulaire: Dorel France SA, 49309 Cholet (FR)
(72) Inventeur: Zweideck, Bruno, 49300 Cholet (FR)
(74) Mandataire: Bioret, Ludovic

(56) Documents cités:
- DE-U- 20 010 856
- DE-U- 20 211 486
- FR-A- 2 771 364
- FR-A- 2 774 055
- FR-A- 2 783 482
- US-A1- 2002 074 774

## Description

Le domaine de l'invention est celui de la puériculture. Plus précisément, l'invention concerne les voitures d'enfant et en particulier les voitures d'enfant équipées de deux poignées indépendantes.

Dans le domaine des voitures pour enfant, on peut en effet distinguer deux grandes catégories de moyens pour le guidage par un utilisateur : les guidons s'étendant transversalement et reliant deux éléments latéraux du châssis et les poignées indépendantes, montées chacune dans le prolongement d'un élément latéral du châssis.
Ces poignées indépendantes sont notamment mises en oeuvre dans le cas des poussettes (ou voitures d'enfant) équipées d'un châssis permettant un pliage selon lequel les côtés du châssis se rapprochent l'un de l'autre (dit pliage 3D), de façon à maximiser la compacité de la poussette pliée, pour faciliter son rangement, et son transport, par exemple dans un véhicule automobile.

On comprend que, dans ce type de pliage, un guidon transversal s'opposerait au pliage (à moins de l'équiper d'une articulation). Il est donc avantageux d'associer une poignée indépendante à chaque côté du châssis.

Ces poignées sont donc montées à l'extrémité de bras poussoirs, qui peuvent par exemple se prolonger par des piètements de roues avant, et être montés coulissants par rapport à ces derniers. Chaque poignée présente donc une première partie de solidarisation montée dans l'alignement du bras poussoir et une seconde partie de préhension, s'étendant formant un angle de l'ordre de 90 ° (cette valeur étant purement indicative) par rapport à la première partie.

Pour des raisons d'ergonomie et de confort de l'utilisateur, et le cas échéant également pour pouvoir réduire l'encombrement de la poussette en position repliée, il a été proposé de rendre chaque poignée pivotante par rapport au bras poussoir de façon qu'elles puissent occuper deux positions distinctes : une position dans laquelle elle s'étend selon l'axe principal de la poussette, et une position dans laquelle elle s'étend perpendiculairement à cet axe (les deux poignées étant alors en vis-à-vis). L'utilisateur peut ainsi choisir la position qui lui convient le mieux. Pour des raisons évidentes de sécurité et de confort, il est nécessaire que les poignées puissent être immobilisées dans chacune des positions définies. Il a donc été proposé des moyens de verrouillage/déverrouillage de la poignée par rapport au bras poussoir correspondant, commandés par des moyens d'actionnement.

Une technique de ce type est décrite dans le document de brevet FR-2 774 055 qui représente l'état de la technique le plus proche, et qui comporte toutes les caractéristiques du préambule de la revendication 1. Selon cette technique, les moyens d'actionnement sont constitués par un bouton poussoir pouvant être déplacé parallèlement à l'axe des bras poussoirs. Ce bouton entraîne les moyens de verrouillage/déverrouillage dans un déplacement également dans une direction parallèle à l'axe des bras poussoirs, à la façon d'un embrayage/débrayage.

Les moyens de verrouillage/déverrouillage sont constitués par un système à crabot. De tels agencements impliquent des mécanismes assez complexes, qui s'avèrent longs et délicats à monter, et sont donc relativement onéreux.

De plus, la position du bouton poussoir de commande est telle, qu'il est difficile, d'une seule main, d'actionner celui-ci tout en tournant la poignée correspondante, cette manoeuvre obligeant une torsion du poignet peu confortable.

L'invention a notamment pour objectif de pallier les inconvénients de l'art antérieur.

Plus précisément, l'invention a pour objectif de proposer une voiture d'enfant à poignées pivotantes plus pratiques et plus simples à manipuler que les poignées de l'art antérieur.

En ce sens, l'invention a aussi pour objectif de fournir une telle poignée dont les moyens d'actionnement sont plus facilement accessibles et manipulables d'une seule main que ceux des poignées existantes.

L'invention a également pour objectif de fournir une telle poignée dont les moyens de verrouillage/déverrouillage sont plus simples de conception et plus faciles à mettre en oeuvre et à monter que ceux des poignées existantes.

Un autre objectif de l'invention est de fournir une telle poignée qui soit compatible avec les autres équipements traditionnels des voitures d'enfant, et notamment ceux susceptibles d'être pilotés à partir de ces mêmes poignées.

Ces objectifs, ainsi que d'autres qui apparaîtront par la suite, sont atteints grâce à l'invention qui a pour objet une voiture d'enfant comprenant deux bras poussoirs portant chacun une poignée montée pivotante, ladite poignée comprenant des moyens de verrouillage/déverrouillage dans au moins deux positions angulaires par rapport audit bras et des moyens d'actionnement desdits moyens de verrouillage/déverrouillage, caractérisée en ce que lesdits moyens d'actionnement sont mobiles selon un axe sensiblement perpendiculaire à l'axe dudit bras poussoir.

De cette façon, les moyens de commande peuvent être placées sur la poignée en une position qui permette d'accéder à celui-ci et de le manipuler aisément et de façon pratique en vue de tourner la poignée de la même main.

De plus, l'action de tels moyens de commande dans une direction sensiblement perpendiculaire à l'axe des bras poussoirs permet la mise en oeuvre de moyens de verrouillage/déverrouillage de conception simple, efficaces et faciles à monter, comme cela va apparaître plus clairement par la suite.

Selon une solution préférée, ladite poignée comprend une partie terminale de préhension et une partie de liaison montée pivotante sur ledit bras poussoir, lesdits moyens d'actionnement faisant saillie sur ladite partie de liaison.

Grâce à cet agencement, la partie de la poignée correspondante peut être saisie à pleine main par l'utilisateur tout en agissant sur les moyens d'actionnement, la rotation d'une poignée pouvant par conséquent être obtenue de façon très pratique d'une seule main.

Selon une solution avantageuse, lesdits moyens de verrouillage/déverrouillage comprennent deux pièces emboîtées s'étendant sensiblement parallèlement à l'axe dudit bras poussoir, une première pièce étant solidaire dudit bras poussoir et une seconde pièce étant solidaire de ladite poignée, lesdites pièces étant mobiles radialement l'une par rapport à l'autre entre une position de verrouillage, dans laquelle elles s'engrènent, et une position de déverrouillage, dans laquelle elles sont désolidarisées..

Avantageusement, l'une desdites pièces est une pièce fixe, dite passive, l'autre pièce, dite pièce de verrouillage/déverrouillage étant mobile radialement, ladite pièce passive étant préférentiellement solidaire dudit bras poussoir.

On obtient donc une solution pour le verrouillage/déverrouillage de la poignée qui s'inscrit dans une approche assez opposée, sur le plan mécanique, aux solutions classiques dans lesquelles les moyens de verrouillage/déverrouillage se déplacent selon l'axe du bras poussoir (ou parallèlement à celui-ci) tels que par exemple les systèmes à crabot.

Dans ce cas, ladite pièce de verrouillage/déverrouillage forme avantageusement un fourreau à l'intérieur duquel est logée au moins partiellement ladite pièce passive.

Ainsi, on obtient une solution relativement compacte et facile à mettre en oeuvre.

Selon une solution préférée, ledit fourreau présente au moins un verrou destiné à venir en prise avec au moins deux logements complémentaires ménagés sur ladite pièce passive de façon angulairement espacée, de façon à obtenir le verrouillage en rotation de ladite poignée..

Préférentiellement, ledit verrou comprend au moins une excroissance, ladite pièce passive présentant au moins deux cavités formant logement pour ladite excroissance.

Bien entendu, d'autres modes de réalisation sont envisageables sans sortir du cadre de l'invention, notamment en prévoyant des excroissances sur la pièce passive et en ménageant à l'intérieur du fourreau, une cavité de verrouillage formant logement pour les excroissances de la pièce passive.

Avantageusement, ladite poignée présente une structure tubulaire à l'intérieur de laquelle est monté ledit fourreau et en ce que ladite structure tubulaire intègrant des moyens de guidage dudit fourreau.

Préférentiellement, ladite poignée intègre des moyens de rappel élastiques tendant à ramener lesdits moyens de verrouillage/déverrouillage en position verrouillée. Dans ce cas, lesdits moyens de rappel élastiques sont avantageusement montés entre ladite poignée et ledit fourreau.

Selon une autre caractéristique, ladite poignée intègre des moyens de blocage axial de ladite poignée par rapport audit bras poussoir.

Selon une variante avantageuse, ladite poignée est traversée par au moins un câble de commande du verrouillage/déverrouillage du pliage dudit châssis.

Dans ce cas, ledit câble commande :
- le verrouillage/déverrouillage du pliage dudit châssis ;
- le blocage de roues avant.

L'invention concerne également une poignée destinée à être montée pivotante sur un bras poussoir d'un châssis de voiture d'enfant, telle que décrite précédemment.

D'autres caractéristiques et avantages de l'invention apparaîtront plus clairement à la lecture d'un mode de réalisation préférentiel de l'invention, donné à titre d'exemple illustratif et non limitatif, et des dessins annexés parmi lesquels :
- la figure 1 est une vue de face de la partie terminale d'une poignée de voiture d'enfant selon l'invention ;
- la figure 2 est une vue selon la coupe BB indiquée sur la figure 1 ;
- la figure 3 est un grossissement partiel de la figure 2, au niveau des moyens de verrouillage/déverrouillage et des moyens d'actionnement associés ;
- la figure 4 est une vue en perspective d'un poignée pivotante selon l'invention montée sur un bras poussoir ;
- la figure 5 est une vue d'une poignée selon l'invention, selon la coupe CC indiquée sur la figure 4 ;
- les figures 6a, 6b et 6c sont des représentations schématiques d'une voiture d'enfant vue de derrière, et présentant trois positions distinctes de poignée.

Comme déjà mentionné précédemment, le principe général de l'invention consiste à prévoir des moyens de commande de verrouillage/déverrouillage d'une poignée pivotante d'une voiture d'enfant susceptibles d'être déplacés selon un axe perpendiculaire à l'axe du bras poussoir correspondant et actionnant des moyens de verrouillage/déverrouillage se déplaçant et agissant préférentiellement selon la même direction que les moyens de commande.

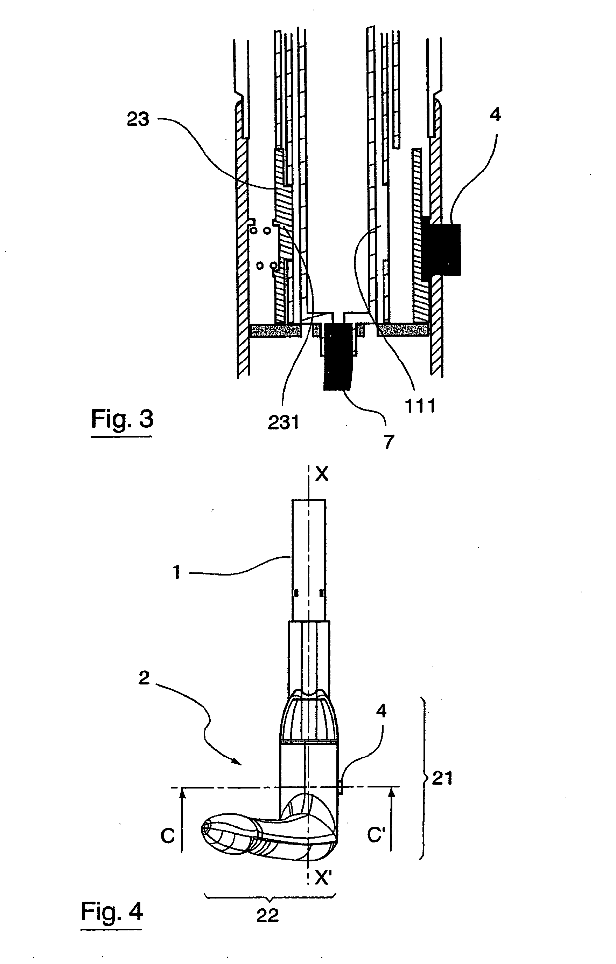

Une voiture d'enfant selon l'invention comprend un châssis présentant deux bras poussoirs 1 (figure 4), portant chacun à leur extrémité supérieure une poignée 2 montée pivotante autour d'un axe xx'.

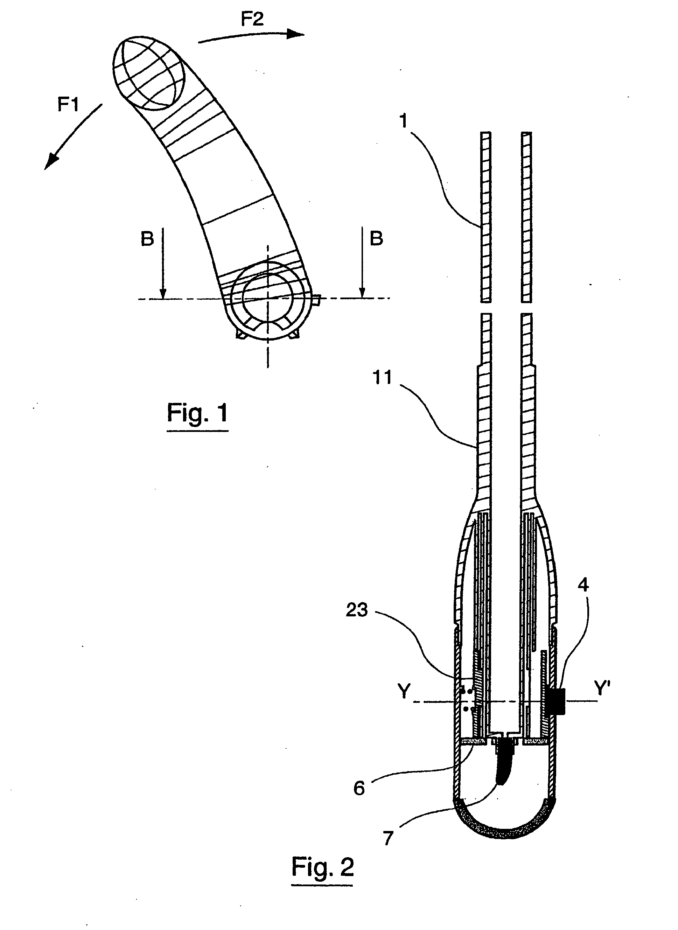

Chaque poignée 2 peut ainsi être pivotée entre une position essentiellement parallèle à l'axe principal de la poussette (position dans laquelle l'extrémité libre des poignées est dirigée vers le haut) et une position selon laquelle les poignées sont dirigées l'une vers l'autre, tel qu'indiqué par les flèches F1 et F2 sur la figure 1, des moyens de verrouillage/déverrouillage étant prévus pour bloquer la poignée dans une position déterminée.

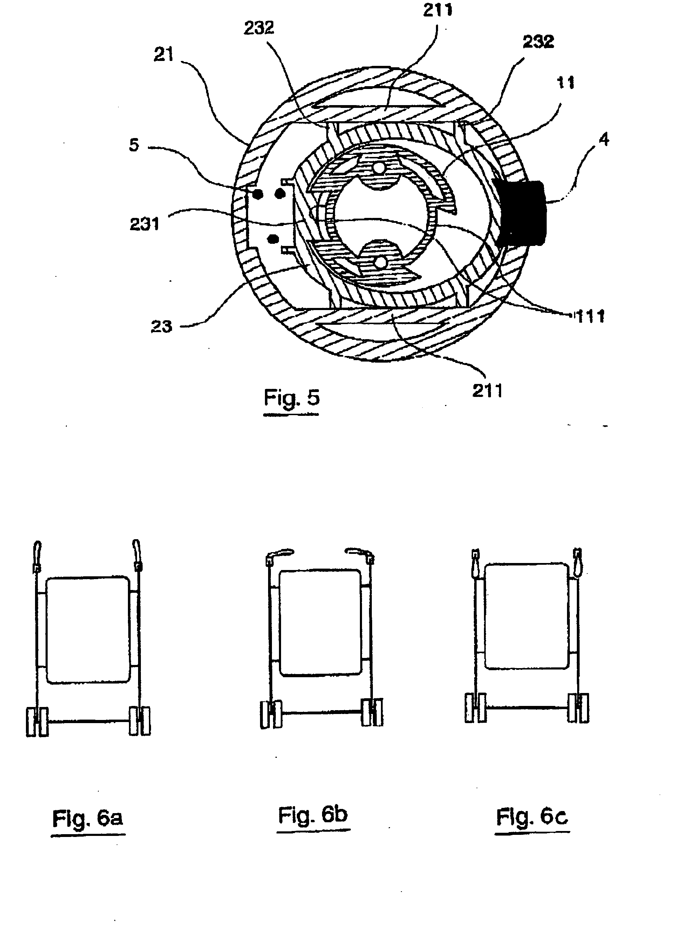

Ces deux positions distinctes de poignée, sont illustrées par les figures 6a et 6b.

Les poignées sont prévues pour pouvoir occuper une troisième position illustrée par la figure 6c, selon laquelle l'extrémité libre des poignées est dirigée vers le bas. Les poignées pourront être amenées dans cette troisième position notamment pour réduire l'encombrement de la voiture lorsque celle-ci est pliée.

Bien sûr, des positions intermédiaires stables peuvent également être prévues.

Selon l'invention, des moyens d'actionnement 4 sont montés sur la poignée 2 de façon à pouvoir être déplacés et agir selon l'axe yy' (figure 2), perpendiculaire à l'axe xx'.

Selon le présent mode de réalisation, la poignée 2 comprend une partie de liaison 21 montée pivotante sur le bras poussoir 1, et une partie terminale de préhension 22.

Tel que cela apparaît clairement sur la figure 4, les moyens d'actionnement 4 des moyens de verrouillage/déverrouillage sont constitués par un bouton poussoir faisant saillie de la partie de liaison 21 de la poignée 2.

Par ailleurs, selon un mode de réalisation préférentiel de l'invention, le bras poussoir porte à son extrémité une pièce dite passive 11 par rapport à laquelle la poignée 2 peut pivoter.

Cette pièce passive 11 présente deux cavités 111 (dans le cas de deux positions stables) formant logement pour un verrou qui va maintenant être explicité plus en détail, en référence aux figures 3 et 5.

Tel que cela apparaît clairement sur la figure 5, la partie de liaison 21 de la poignée 2 présente une structure tubulaire à l'intérieur de laquelle sont montés les moyens de verrouillage/déverrouillage.

Ces derniers comprennent un fourreau 23 à l'intérieur duquel pénètre la pièce passive 11, ce fourreau présentant un verrou 231 destiné à pénétrer les cavités 111 de la pièce passive 11, en vue de bloquer la rotation de la poignée 2 par rapport au bras poussoir 1 correspondant.

De plus, la structure tubulaire de partie de liaison 21 de la poignée 2 intègre des moyens de guidage du fourreau 23 qui porte des pattes 232 susceptibles de glisser sur ces moyens de guidage 211.

Selon la structure qui vient d'être décrite, on obtient le déverrouillage en rotation de la poignée par rapport au bras poussoir en appuyant sur le bouton poussoir 4, ce qui entraîne le déplacement radial du fourreau 23 par rapport à la pièce passive 11 et par conséquent, le retrait du verrou 231 à partir d'une des cavités 111.

On note qu'un ressort 5 est monté entre le fourreau 23 et la partie de liaison 21 de la poignée 2, ce ressort étant prévu de façon à ramener le fourreau vers ou dans une position de verrouillage, en l'absence d'actions sur le bouton poussoir 4.

On note également qu'une pièce de blocage 6 est montée dans la poignée 2 de telle sorte que cette dernière soit immobilisée par rapport au bras poussoir 1 selon l'axe longitudinal de celui-ci.

En outre, la poignée selon l'invention permet le passage d'un câble 7 qui peut s'étendre dans l'évidement axial de la pièce passive 11 puis dans celui du bras poussoir 1, un tel câble étant relié à un bouton de commande prévu sur la poignée 2 pour obtenir le déverrouillage du châssis en vue de son pliage.

De nombreuses variantes de réalisation peuvent bien sûr être envisagées, sans sortir du cadre de l'invention. Ainsi, d'autres moyens de verrouillage peuvent être prévus, sur l'une ou l'autre des pièces, et peuvent permettre le cas échéant un verrouillage dans une ou plusieurs positions intermédiaires.

## Revendications

1. Voiture d'enfant comprenant deux bras poussoirs (1) portant chacun une poignée montée pivotante (2) autour d'un axe (xx') parallèle aux bras poussoirs, ladite poignée (2) comprenant des moyens d'actionnement (4) de moyens de verrouillage/déverrouillage de ladite poignée (2) dans au moins deux positions angulaires par rapport audit bras (1), **caractérisée en ce que** lesdits moyens d'actionnement (4) sont mobiles selon un axe sensiblement perpendiculaire à l'axe de rotation (xx') de ladite poignée (2),
lesdits moyens de verrouillage/déverrouillage comprennent deux pièces emboîtées s'étendant sensiblement parallèlement à l'axe dudit bras poussoir (1), une première pièce étant solidaire dudit bras poussoir (1) et une seconde pièce étant solidaire de ladite poignée (2),
lesdites pièces étant mobiles radialement l'une par rapport à l'autre entre une position de verrouillage, dans laquelle elles s'engrènent, et une position de déverrouillage, dans laquelle elles sont désolidarisées.

2. Voiture d'enfant selon la revendication 1, **caractérisée en ce que** ladite poignée (2) comprend une partie terminale de préhension (22) et une partie de liaison (21) montée pivotante sur ledit bras poussoir (1), lesdits moyens d'actionnement (4) faisant saillie sur ladite partie de liaison (21).

3. Voiture d'enfant selon la revendication 1 ou 2, **caractérisée en ce que** l'une desdites pièces est une pièce fixe, dite passive, l'autre pièce, dite pièce de verrouillage/déverrouillage étant mobile radialement.

4. Voiture d'enfant selon la revendication 3, **caractérisée en ce que** ladite pièce passive est solidaire dudit bras poussoir.

5. Voiture d'enfant selon l'une des revendications 3 et 4, **caractérisée en ce que** ladite pièce de verrouillage/déverrouillage (23) forme un fourreau à l'intérieur duquel est logée au moins partiellement ladite pièce passive (11).

6. Voiture d'enfant selon la revendication 5, **caractérisée en ce que** ledit fourreau présente au moins un verrou (231) destiné à venir en prise avec au moins deux logements complémentaires ménagés sur ladite pièce passive (11) de façon angulairement espacée, de façon à obtenir le verrouillage en rotation de ladite poignée.

7. Voiture d'enfant selon la revendication 6, **caractérisée en ce que** ledit verrou (231) comprend au moins une excroissance, ladite pièce passive (11) présentant au moins deux cavités (111) formant logement pour ladite excroissance (231).

8. Voiture d'enfant selon l'une quelconque des revendications 5 à 7, **caractérisée en ce que** ladite poignée (2) présente une structure tubulaire à l'intérieur de laquelle est monté ledit fourreau, ladite structure tubulaire intégrant des moyens de guidage (211) dudit fourreau.

9. Voiture d'enfant selon l'une quelconque des revendications 1 à 8, **caractérisée en ce que** ladite poignée (2) intègre des moyens de rappel élastiques tendant à ramener lesdits moyens de verrouillage/déverrouillage en position verrouillée.

10. Voiture d'enfant selon la revendication 9, **caractérisée en ce que** lesdits moyens de rappel élastiques (5) sont montés entre ladite poignée (2) et ledit fourreau.

11. Voiture d'enfant selon l'une quelconque des revendications 1 à 10, **caractérisée en ce que** ladite poignée (2) intègre des moyens de blocage axial (6) de ladite poignée (2) par rapport audit bras poussoir (1).

12. Voiture d'enfant selon l'une quelconque des revendications 1 à 11, **caractérisée en ce que** ladite poignée (2) est traversée par au moins un câble (7) de commande.

13. Voiture d'enfant selon la revendication 12, **caractérisée en ce que** ledit câble commande :
- le verrouillage/déverrouillage du pliage dudit châssis ;
- le blocage de roues avant.

14. Poignée (2) destinée à être montée pivotante sur un bras poussoir d'un châssis de voiture d'enfant selon l'une des revendications 1 à 13.

## Claims

1. Pram comprising two pushing arms (1) which each carry a handle (2) which is pivotably mounted about an axis (XX') parallel with the pushing arms, the handle (2) comprising means (4) for actuating means for locking/unlocking the handle (2) in at least two angular positions relative to the arm (1), **characterised in that** the actuation means (4) can be moved along an axis which is substantially perpendicular relative to the rotation axis (XX') of the handle (2),
the locking/unlocking means comprise two fitted components which extend substantially parallel with the axis of the pushing arm (1), a first component being fixedly joined to the pushing arm (1) and a second component being fixedly joined to the handle (2),
the components being radially movable relative to each other between a locking position in which they engage and an unlocking position in which they are disengaged.

2. Pram according to claim 1, **characterised in that** the handle (2) comprises an end gripping portion (22) and a connection portion (21) which is pivotably mounted on the pushing arm (1), the actuation means (4) protruding at the connection portion (21).

3. Pram according to claim 1 or claim 2, **characterised in that** one of the components is a fixed component, referred to as a passive component, the other component, referred to as a locking/unlocking component, being radially movable.

4. Pram according to claim 3, **characterised in that** the passive component is fixedly joined to the pushing arm.

5. Pram according to either claim 3 or claim 4, **characterised in that** the locking/unlocking component (23) forms a sheath, inside which the passive component (11) is at least partially accommodated.

6. Pram according to claim 5, **characterised in that** the sheath has at least one lock (231) which is intended to move into engagement with at least two complementary housings provided on the passive component (11) in an angularly spaced manner, in order to lock the handle in terms of rotation.

7. Pram according to claim 6, **characterised in that** the lock (231) comprises at least one protuberance, the passive component (11) having at least two cavities (111) which form a housing for the protuberance (231).

8. Pram according to any one of claims 5 to 7, **characterised in that** the handle (2) has a tubular structure, inside which the sheath is mounted, means (211) for guiding the sheath being integrated in the tubular structure.

9. Pram according to any one of claims 1 to 8, **characterised in that** resilient return means which tend to return the locking/unlocking means into a locked position are integrated in the handle (2).

10. Pram according to claim 9, **characterised in that** the resilient return means (5) are mounted between the handle (2) and the sheath.

11. Pram according to any one of claims 1 to 10, **characterised in that** means (6) for axially locking the handle (2) relative to the pushing arm (1) are integrated in the handle (2).

12. Pram according to any one of claims 1 to 11, **characterised in that** at least one control cable (7) extends through the handle (2).

13. Pram according to claim 12, **characterised in that** the cable controls:
- the locking/unlocking of the folding of the chassis;
- the locking of front wheels.

14. Handle (2) which is intended to be pivotably mounted on a pushing arm of a chassis of a pram according to any one of claims 1 to 13.

## Patentansprüche

1. Kinderwagen, umfassend zwei Schiebearme (1), die jeweils einen Griff (2) tragen, der um eine Achse (XX') parallel zu den Schiebearmen schwenkbar ist, wobei der Griff (2) Mittel (4) zur Betätigung von Mitteln zur Verriegelung/Entriegelung des Griffes (2) in mindestens zwei Winkelpositionen zu den Armen (1) umfassen, **dadurch gekennzeichnet, dass** die Betätigungsmittel (4) entlang einer Achse im Wesentlichen senkrecht auf die Drehachse (XX') des Griffes (2) beweglich sind, wobei die Verriegelungs-/Entriegelungsmittel zwei ineinander gesteckte Teile umfassen, die sich im Wesentlichen parallel zu der Achse des Schiebearms (1) erstrecken, wobei ein erster Teil mit den Schiebearmen verbunden ist und wobei ein zweiter Teil mit dem Griff (2) verbunden ist, wobei die Teile radial zueinander zwischen einer Verriegelungsposition, in der sie ineinander greifen, und einer Entriegelungsposition, in der sie getrennt sind, beweglich sind.

2. Kinderwagen nach Anspruch 1, **dadurch gekennzeichnet, dass** der Griff (2) einen Endteil (22) zum Greifen und einen Verbindungsteil (21) umfasst, der schwenkbar auf dem Schiebearm (1) montiert ist, wobei die Betätigungsmittel (4) von dem Verbindungsteil (21) vorstehen.

3. Kinderwagen nach Anspruch 1 oder 2, **dadurch gekennzeichnet, dass** einer der Teile ein fester, so genannter passiver Teil ist, wobei der andere Teil, Verriegelungs-/Entriegelungsteil genannt, radial beweglich ist.

4. Kinderwagen nach Anspruch 3, **dadurch gekennzeichnet, dass** der passive Teil mit dem Schiebearm verbunden ist.

5. Kinderwagen nach einem der Ansprüche 3 und 4, **dadurch gekennzeichnet, dass** der Verriegelungs-/Entriegelungsteil (23) eine Hülse bildet, in deren Inneren zumindest teilweise der passive Teil (11) angeordnet ist.

6. Kinderwagen nach Anspruch 5, **dadurch gekennzeichnet, dass** die Hülse mindestens einen Riegel (231) aufweist, der dazu bestimmt ist, in mindestens zwei komplementäre Lagerungen, die auf dem passiven Teil (11) mit einem Winkelabstand vorgesehen sind, einzugreifen, um die Drehverriegelung des Griffes zu erzielen.

7. Kinderwagen nach Anspruch 6, **dadurch gekennzeichnet, dass** der Riegel (231) mindestens eine Ausstülpung umfasst, wobei der passive Teil (11) mindestens zwei Hohlräume (111) umfasst, die eine Lagerung für die Ausstülpung (231) bilden.

8. Kinderwagen nach einem der Ansprüche 5 bis 7, **dadurch gekennzeichnet, dass** der Griff (2) eine röhrenförmige Struktur aufweist, in deren Inneren die Hülse montiert ist, wobei die röhrenförmige Struktur Führungsmittel (211) für die Hülse umfasst.

9. Kinderwagen nach einem der Ansprüche 1 bis 8, **dadurch gekennzeichnet, dass** der Griff (2) elastische Rückstellmittel umfasst, die darauf hinwirken, die Verriegelungs-/Entriegelungsmittel in die verriegelte Position zurückzuführen.

10. Kinderwagen nach Anspruch 9, **dadurch gekennzeichnet, dass** die elastischen Rückstellmittel (5) zwischen dem Griff (2) und der Hülse montiert sind.

11. Kinderwagen nach einem der Ansprüche 1 bis 10, **dadurch gekennzeichnet, dass** der Griff (2) Mittel (6) zur axialen Feststellung des Griffes (2) in Bezug zum Schiebearm (1) umfasst.

12. Kinderwagen nach einem der Ansprüche 1 bis 11, **dadurch gekennzeichnet, dass** durch den Griff (2) mindestens ein Steuerkabel (7) hindurchgeht.

13. Kinderwagen nach Anspruch 12, **dadurch gekennzeichnet, dass** das Steuerkabel:
- die Verriegelung/Entriegelung des Zusammenklappens des Gestells steuert,
- die Feststellung der Vorderräder steuert.

14. Griff (2), der dazu bestimmt ist, auf einem Schiebearm eines Kinderwagengestells nach einem der Ansprüche 1 bis 13 schwenkbar montiert zu werden.
